# EUROPEAN PATENT SPECIFICATION

(11) **EP 3 520 611 B1**
(45) Date of publication and mention of the grant of the patent: **07.04.2021**
(21) Application number: 18154668.0
(22) Date of filing: 01.02.2018
(51) Int. Cl.: A01M 5/02

(54) **A TICK DRAGGING DEVICE**
ZECKENZIEHVORRICHTUNG
DISPOSITIF DE DRAGAGE DE TIQUES

(43) Date of publication of application: 07.08.2019
(73) Proprietor: Kehäposti Ky, 02360 Espoo (FI)
(72) Inventor: Kutila, Reima, 02360 ESPOO (FI)
(74) Representative: Koivisto, Harri Kristian

(56) References cited:
- WO-A1-91/16818
- JP-A- 2004 215 577
- US-A1- 2006 204 531

## Description

### BACKGROUND

The present invention relates to collecting insects.

Ticks are often encountered in damp and forested areas with dense undergrowth. Ticks go through three different stages of development: from larvae to nymph and then to adult. At each stage, they need blood to develop. Ticks may wait for suitable hosts at grass level, at 10...20 centimetres above the ground. Typical host animals are mice and moles or larger mammals, such as dogs or humans. Ticks have no eyes, instead they sense the environment with special organs sensing carbon dioxide, smells, heat and motion.

Ticks are known to carry a wide array of pathogens and cause severe diseases, such as Lyme disease. Humans or domestic animals may get an infection from ticks by roaming on terrain having a suitable environment for ticks. Climate change has enabled tick to spread to wider areas. Insecticides are not a practical option for removing ticks, as they also affect insects beneficial to the economy of nature.

Tick dragging is one method of harvesting wild ticks. The method is used to collect ticks for study purposes, wherein a small portion of ticks cling to a fabric being dragged along the terrain, over small bushes or grass. Several baited traps have also been introduced. The tick dragging method is a useful way to collect ticks from a large area. Different species may respond in a different manner to tick dragging, wherein some species may not be interested in the dragged fabric.

One example of a tick drag comprises a 1-square-metre strip of white fabric mounted on a pole that is tied to a length of rope. One effective example of fabric is corduroy. When tick dragging, a user drags the fabric behind him or her through terrain that is suspected of harbouring ticks, working in a grid-like pattern. He or she may also flag low-lying bushes and other vegetation by waving the cloth over them Relevant state of the art documents in this technical field are for example: US 2006/204531 A1, WO 91/16818 A1, JP 2004 215577 A.

### SUMMARY

This summary is provided to introduce a simplified description of the selection of concepts, which are further specified below in the detailed description. This summary is not intended to identify key or essential features of the claimed subject matter, nor is it intended to limit the scope of the claimed subject matter. Furthermore, the claimed subject matter is not limited to implementations that solve any or all disadvantages noted in any part of this disclosure.

A tick dragging device comprises a fabric to be dragged along the terrain. The device attracts ticks to the fabric. The fabric comprises at least one pocket for a bait. The pocket spreads the effect of the bait to ticks hiding in the undergrowth. A selection of baits may be used to attract different species.

The tick dragging device may be used to collect a significant number of ticks from defined areas or their vicinities, such as home yards, playgrounds or paths across fields or forests. Reducing the number of ticks in the area may result in a significant decline in the tick population. Tick dragging may be repeated periodically to ensure catching ticks in various development phases. The activity of the ticks varies due to the development phase. The bait may be selected to attract a particular tick species, or a particular development stage of the species. Using the tick dragging device systematically may significantly reduce the risk of catching a dangerous disease from a tick bite in predefined areas, such as yards or parks. The tick dragging device is safe for the environment, children and pets as pesticides are not required.

Many of the attendant features will be more readily appreciated as they become better understood by reference to the following detailed description considered in connection with the accompanying drawings.

### BRIEF DESCRIPTION OF THE DRAWINGS

The present description will be better understood from the following detailed description read in light of the accompanying drawings, wherein
FIG. 1 illustrates schematically an example of one embodiment of a tick dragging device;
FIG. 2 illustrates schematically an example of one embodiment of a tick dragging device having a carbon dioxide emitter;
FIG. 3 illustrates schematically an example of one embodiment of a tick dragging device having multiple strips at a trailing edge;
FIG. 4 illustrates schematically an example of one embodiment of a tick dragging device having perforated fabric;
FIG. 5 illustrates schematically a use scenario of a tick dragging device; and
FIG. 6 illustrates schematically an example of one embodiment of a tick dragging device having carbon dioxide emitter.

Like reference numerals are used to designate like parts in the accompanying drawings.

### DETAILED DESCRIPTION

The detailed description provided below, to be understood in connection with the appended drawings, is intended as a description of the present examples. It is not intended to represent the only forms in which the present example can be constructed or utilized. However, the same or equivalent functions may be achieved by means of different examples.

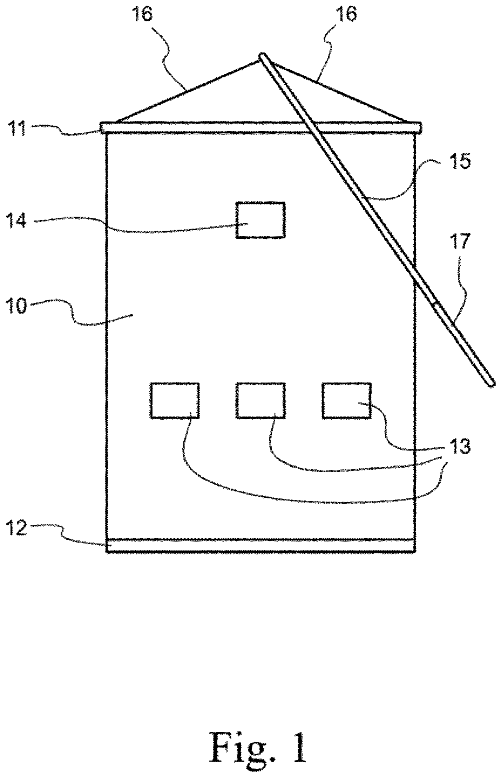

FIG. 1 illustrates schematically an example of one embodiment of a tick dragging device. The tick dragging device comprises a fabric 10 having a leading edge 11 and a trailing edge 12. In this example, the fabric 10 has a rectangular shape, wherein the length of the leading edge 11 is between 0.9... 1.2 m, the lengths of the trailing edge 12 is between 0.9... 1.2 m and the distance from the leading edge 11 to the trailing edge 12 is between 1.2... 1.5 m. The aforementioned dimensions represent one example and are not disclosed as a limitation. The colour of the fabric 10 may be pale or white as those colours have been discovered to be effective for collecting ticks. Alternatively, the fabric 10 may have any other colour or be multicoloured, for example, having stripes. The shape of the fabric 10 may be trapezoid, triangle, or the shape may be rounded. The dimensions of the fabric 10 may be selected to be comfortably draggable along the terrain. The dimensions may be altered according to the person dragging the device, or features of the terrain. Both sides of the fabric 10 may be stitched to maintain the shape of the fabric 10. The fabric 10 may be cotton, corduroy, velvet, fleece, fur, fake fur or any material providing suitable contact for clinging ticks. The fabric 10 may have multiple layers of different materials, for example upper side may comprise a plastic film layer.

When the fabric 10 is dragged along the terrain, it attracts a tick to cling to the fabric 10. The tick dragging device comprises at least one pocket 13 configured to receive and store a bait, wherein the pocket 13 is configured to spread the effect of the bait to the tick. In one embodiment, the device comprises three pockets 13 to house several baits. The baits may be similar or have different effects. In one example, the pocket 13 is made of the same material as the fabric 10. In one example, the pocket 13 is sewn to the fabric 10. In one example, the pocket 13 is made of a porous material that allows heat, sound or scent from the bait to pass through the pocket wall. The pocket 13 may be solid or semi-solid, for example, made of plastic and comprising holes to enable the bait's effect to spread to the environment.

In one embodiment, the bait inside the pocket 13 is an exothermic device. The exothermic device releases energy by heat or light. Ticks are known to react to heat, as it resembles animals or humans passing by. Ticks interpret the heat as coming from a mammal and cling to the fabric 10. In one embodiment, the exothermic device is a heat pack. The heat pack may utilize an exothermic chemical reaction. In one example, the heat pack has a one-time exothermic reaction. In one example, the exothermic reaction is started by unwrapping an air-tight packet containing moisture, iron powder and salt or catalysts. The iron powder rusts after being exposed to oxygen in the air. The process may continue for several hours, for example, up to 10 hours depending on the size of the heat pack. The heat pack temperature may be approximately 40°C...55°C. The process may be stopped by enclosing the heat pack in an airtight package.

Alternatively, or in addition, the heat pack may react to applied pressure, for example, the user squeezing the heat pack. In one embodiment, the heat pack is reusable. The exothermic reaction may start by flexing the heat pack, wherein the heat packs may be reused by placing it in boiling water for 10... 15 minutes. In one embodiment, the exothermic device is a battery-operated device, wherein the heat is produced by electricity. The battery-operated device may produce light and/or sounds that have been proven to attract ticks.

Ticks can detect the 4% of carbon dioxide in human exhaled air. In one embodiment, the bait is a carbon dioxide emitter. The carbon dioxide emitter may be used in addition to the heat pack, wherein a second pocket 14 is configured to store the carbon dioxide emitter. In one embodiment, the carbon dioxide emitter is a carbon dioxide cylinder configured to dispense carbon dioxide. The carbon dioxide cylinder may be attached to the first pocket 13 or the second pocket 14. The cylinder may comprise a thread fitted to a valve. Adjusting the valve allows the carbon dioxide in the cylinder to dissipate slowly during the tick dragging. Different sizes of carbon dioxide cylinders may be used, for example, a 16 g...25 g cylinders or larger cylinders up to 1 kg. The 25 g cylinder may discharge in 2-3 hours with a suitable valve adjustment. The pressure inside the carbon dioxide cylinder drops as it discharges, therefore the valve may be opened from time to time during the tick dragging. In one embodiment, the second pocket 14 is positioned to middle of the fabric 10, near the leading edge 11. Carbon dioxide is heavier than air and after discharging drifts down to attract the ticks.

In one embodiment, the carbon dioxide emitter is a block of dry ice. The block of dry ice may be positioned either to the first pocket 13 or to the second pocket 14. Dry ice consists of carbon dioxide, wherein a small block may produce 800 litres of gaseous carbon dioxide. The first pocket 13 or the second pocket 14 may be a plastic bag having small holes for discharging the carbon dioxide. Any means suitable for discharging carbon dioxide from a portable device may be used. In one embodiment, the bait comprises pheromones configured to attract ticks. The bait may contain human sweat, for example, used clothing. In one embodiment, the bait comprises a sound-generating device.

In one embodiment, the leading edge 11 comprises a rigid bar, for example, a tube arranged along the leading edge 11. The tick dragging device is draggable from ropes 16 connected to the leading edge 11. In one embodiment, a pole 15 is attached to the rope 16, wherein the tick dragging device is draggable from a distance. The length of the pole 15 may be adjustable via a telescopic member 17. In one example, the length of the pole is between 0.6 m and 1.4 m. In one example, the leading edge 11 of the fabric 10 is attached to the pole 15, wherein the action of tick dragging is reminiscent of dragging a flag across the terrain.

The leading edge 11 may comprise a fabric sewn tunnel and an extension sleeve configured for a rigid bar, such as a plastic tube. Both ends of the tunnel may be open. The ends may be closed with a Velcro fastener or a sealing tape with a notch to seal the plastic tube into the tunnel. The plastic tube may comprise an attachment device for the rope 16. In one embodiment, the plastic tube comprises at least two portions having a socket joint, wherein the tick dragging device may be stored or sold in a relatively small package.

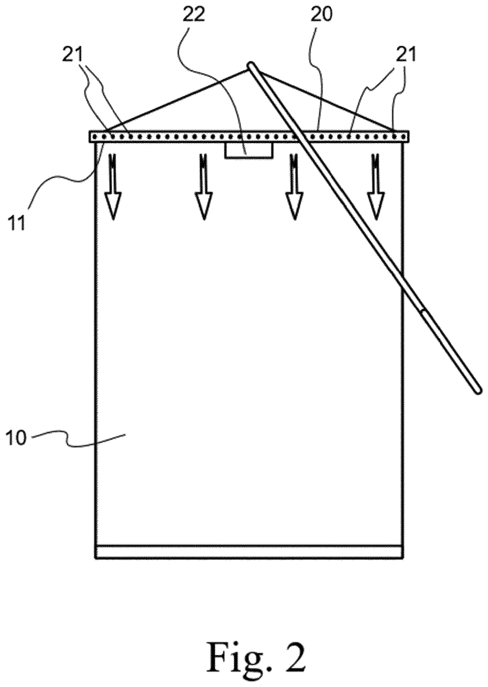

FIG. 2 illustrates schematically an example of one embodiment of a tick dragging device. In this example, the leading edge 11 comprises a tube 20 and a third pocket 22 configured to be in contact with the tube 20. The tube 20 comprises multiple emitter holes 21. The carbon dioxide emitter, for example the carbon dioxide cylinder, is inside the tube 20, wherein the carbon dioxide is arranged to flow through the emitter holes 21. The carbon dioxide flows to the terrain attracting ticks to cling to the fabric 10. In one embodiment, the third pocket 22 is configured to be part of the tube 20. In one embodiment, the third pocket is configured to be connected to the tube via a hose, enabling movement between the tube 20 and the carbon dioxide cylinder. In one embodiment, the dry ice may be positioned inside the tube 20, wherein the tube 20 forms the third pocket 22.

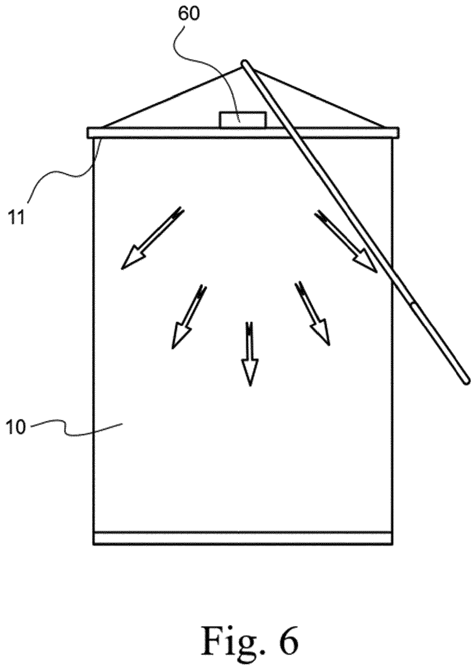

FIG. 6 illustrates schematically an example of one embodiment of a tick dragging device. In this example the leading edge 11 comprises a rigid bar and a carbon dioxide pocket 60 attached to the rigid bar. The carbon dioxide pocket 60 is configured to receive a carbon dioxide emitter, such as the carbon dioxide cylinder. The carbon dioxide cylinder may be connected to the rigid bar with a clamp. The carbon dioxide flows from the carbon dioxide cylinder downwards, wherein the tick may detect a change in the carbon dioxide level. In one embodiment the dry ice may be positioned inside the carbon dioxide pocket 60.

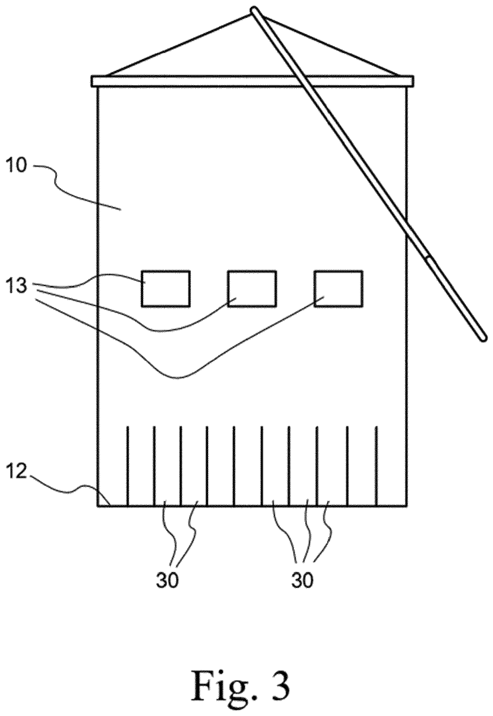

FIG. 3 illustrates schematically an example of one embodiment of a tick dragging device. In this example, the trailing edge 12 comprises multiple strips 30 of fabric 10. The strips may conform to various shapes of the terrain when dragged, for example, descending lower between the underbrush. In one embodiment, the trailing edge 12 comprises an elongated weight. The elongated weight allows the trailing edge 12 to fall further down to the underbrush. In one embodiment, the weights are attached to the ends of multiple strips 30. The elongated weight may be a lead band or similar heavy and elastic material.

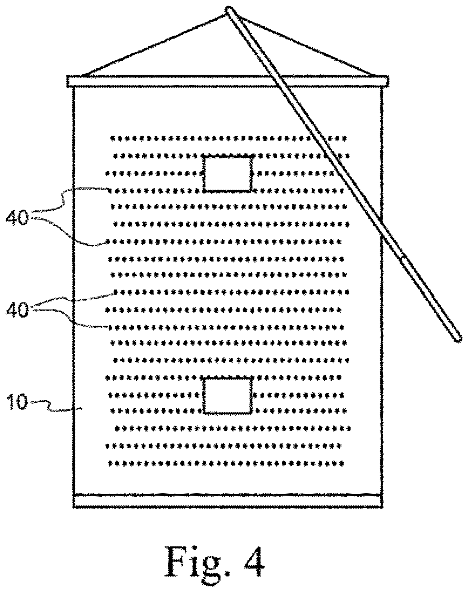

FIG. 4 illustrates schematically an example of one embodiment of a tick dragging device. In this example, the fabric 10 comprises holes 40 in the surface being dragged along the terrain. In this example, the fabric 10 is perforated. The holes 40 may improve the spreading effect of the bait into the environment. The holes may increase the activity of a tick as it may hide in the holes or move to other side of the fabric 10, thus remaining longer in the fabric 10. The fabric 10 may comprise different surfaces on different sides. In one embodiment, the fabric 10 is fake fur. The holes 40 may improve the drying time of the fabric 10.

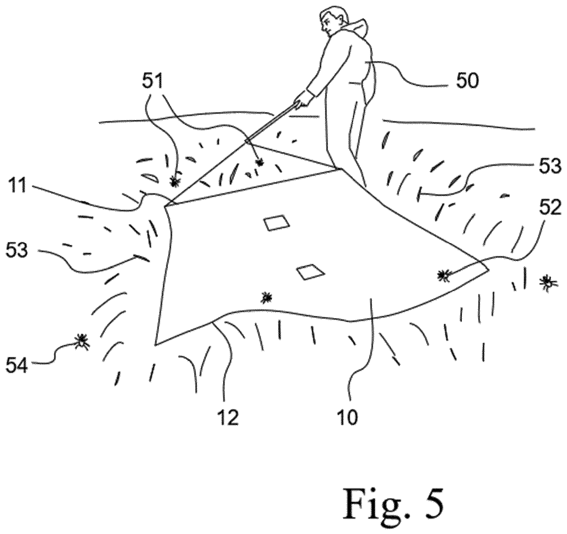

FIG. 5 illustrates one simplified use scenario of tick dragging. The user 50 drags the device behind him, walking at an even, slow pace along the terrain 53. Ticks 52 cling to the fabric 10 as the tick dragging device passes them - the ticks are not illustrated in real-life size. A portion 51 of the ticks are at the route of the tick dragging device and will most likely be attracted to cling to the underside of the fabric 10 as it passes them. Another portion 54 of the ticks will be collected when the user drags the device over them. The user 50 may cover the area by dragging the device systematically, for example, in a matrix format. The user 50 may drag the leading edge 11 approximately 10 cm above the undergrowth to ensure that the device moves smoothly. The user 50 should wear a protective overall to prevent tick bites.

Ticks 52 may be collected from the tick collecting device by shaking the fabric 10. Sometimes, the ticks 52 cling to the fabric 10 so tightly, that mechanical removal is required. Ticks may be brushed off the fabric 10 with a suitable brush. In one example, ticks are removed with a lint roller. In one example the fabric 10 is rinsed with water to remove the ticks. In one example ticks are removed with tick tweezers.

In one use scenario, the tick dragging device is used to pollinate various self-pollinating berries or other plants by dragging the fabric 10 over the plants. The pollination effect may be increased by having fake fur as the fabric 10 and/or sweeping the area to cross in multiple directions. The pollination may be repeated several times during the flowering period.

A tick dragging device is disclosed, comprising a fabric having a leading edge and a trailing edge, being configured to be dragged from the leading edge along the terrain, thereby attracting a tick to cling to the fabric. The fabric comprises at least one pocket configured to receive and store a bait, wherein the pocket is configured to spread the effect of the bait to the tick. In one embodiment, the bait is an exothermic device. In one embodiment, the exothermic device is a heat pack. In one embodiment, the exothermic device is a battery-operated device. In one embodiment, the bait is a carbon dioxide emitter. In one embodiment, the carbon dioxide emitter is a carbon dioxide cylinder configured to dispense carbon dioxide. In one embodiment, the carbon dioxide emitter is a block of dry ice. In one embodiment, a tube is arranged along the leading edge, wherein the tick dragging device is draggable from a rope connected to the tube. In one embodiment, the tube comprises multiple emitter holes, wherein the carbon dioxide emitter is inside the tube, and the carbon dioxide is arranged to flow through the emitter holes. In one embodiment, the trailing edge comprises multiple strips of fabric. In one embodiment, the fabric comprises holes in the surface being dragged along the terrain. In one embodiment, the trailing edge comprises an elongated weight. In one embodiment, the fabric is fake fur. In one embodiment, the bait comprises pheromones. In one embodiment, the bait comprises a sound-generating device.

Any range or device value given herein may be extended or altered without losing the effect sought.

Although at least a portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The term 'comprising' is used herein to mean including the elements identified, but that such elements do not comprise an exclusive list and a device may contain additional blocks or elements.

It will be understood that the above description is given by way of example only and that various modifications may be made by those skilled in the art. The above specification, examples and data provide a complete description of the structure and use of exemplary embodiments.

## Claims

1. A tick dragging device, comprising:
a fabric (10) having a leading edge (11) and a trailing edge (12), being configured to be dragged from the leading edge (11) along the terrain, thereby attracting a tick to cling to the fabric (10);
**characterized in that** the fabric (10) comprises at least one pocket (13, 14, 22) configured to receive and store a bait, wherein the pocket (13, 14, 22) is configured to spread the effect of the bait to the tick.

2. A tick dragging device according to claim 1, **characterized in that** the bait is an exothermic device.

3. A tick dragging device according to claim 2, **characterized in that** the exothermic device is a heat pack.

4. A tick dragging device according to claim 2, **characterized in that** the exothermic device is a battery-operated device.

5. A tick dragging device according to any of the claims 1 to 4, **characterized in that** the bait is a carbon dioxide emitter.

6. A tick dragging device according to claim 5, **characterized in that** the carbon dioxide emitter is a carbon dioxide cylinder configured to dispense carbon dioxide.

7. A tick dragging device according to claim 5, **characterized in that** the carbon dioxide emitter is a block of dry ice.

8. A tick dragging device according to any of the claims 1 to 7, **characterized in that** a tube is arranged along the leading edge (11), wherein the tick dragging device is draggable from a rope (16) connected to the tube.

9. A tick dragging device according to claim 8, **characterized by** the tube comprising multiple emitter holes, the carbon dioxide emitter being inside the tube, and the carbon dioxide being arranged to flow through the emitter holes.

10. A tick dragging device according to any of the claims 1 to 9, **characterized in that** the trailing edge (12) comprises multiple strips of fabric (10).

11. A tick dragging device according to any of the claims 1 to 10, **characterized in that** the fabric (10) comprises holes in the surface being dragged along the terrain.

12. A tick dragging device according to any of the claims 1 to 11, **characterized in that** the trailing edge (12) comprises an elongated weight.

13. A tick dragging device according to any of the claims 1 to 10, **characterized in that** the fabric (10) is fake fur.

14. A tick dragging device according to any of the claims 1 to 10, **characterized in that** the bait comprises pheromones.

15. A tick dragging device according to any of the claims 1 to 10, **characterized in that** the bait comprises a sound-generating device.

## Patentansprüche

1. Gezogene Zeckenfangvorrichtung, umfassend:
ein Flächengebilde (10) mit einer vorderen Kante (11) und einer hinteren Kante (12), das so eingerichtet ist, dass es ausgehend von der vorderen Kante (11) über das Gelände gezogen wird und dadurch die Zecken verleitet, sich am Flächengebilde (10) anzuheften;
**gekennzeichnet dadurch, dass** das Flächengebilde (10) mindestens eine Tasche (13, 14, 22) umfasst, die zum Aufnehmen und Aufbewahren eines Lockmittels eingerichtet ist, wobei die Tasche (13, 14, 22) dazu eingerichtet ist, die Wirkung des Lockmittels auf die Zecke zu verbreiten.

2. Gezogene Zeckenfangvorrichtung nach Anspruch 1, **gekennzeichnet dadurch, dass** das Lockmittel eine exotherme Vorrichtung ist.

3. Gezogene Zeckenfangvorrichtung nach Anspruch 2, **gekennzeichnet dadurch, dass** die exotherme Vorrichtung ein Wärmekissen ist.

4. Gezogene Zeckenfangvorrichtung nach Anspruch 2, **gekennzeichnet dadurch, dass** die exotherme Vorrichtung eine batteriebetriebene Vorrichtung ist.

5. Gezogene Zeckenfangvorrichtung nach einem der Ansprüche 1 bis 4, **gekennzeichnet dadurch, dass** das Lockmittel ein Kohlenstoffdioxid-Emitter ist.

6. Gezogene Zeckenfangvorrichtung nach Anspruch 5, **gekennzeichnet dadurch, dass** der Kohlenstoffdioxid-Emitter ein Kohlenstoffdioxid-Zylinder ist, der zur Abgabe von Kohlenstoffdioxid eingerichtet ist.

7. Gezogene Zeckenfangvorrichtung nach Anspruch 5, **gekennzeichne**t dadurch, dass der Kohlenstoffdioxid-Emitter ein Block Trockeneis ist.

8. Gezogene Zeckenfangvorrichtung nach einem der Ansprüche 1 bis 7, **gekennzeichnet dadurch, dass** an der vorderen Kante (11) eine Röhre angeordnet ist, wobei die Zeckenfangvorrichtung über ein mit der Röhre verbundenes Seil (16) gezogen werden kann.

9. Gezogene Zeckenfangvorrichtung nach Anspruch 8, **gekennzeichnet dadurch, dass** die Röhre mehrere Abgabelöcher umfasst, wobei der Kohlenstoffdioxid-Emitter sich innerhalb der Röhre befindet und das Kohlenstoffdioxid so eingerichtet ist, dass es durch die Abgabelöcher strömt.

10. Gezogene Zeckenfangvorrichtung nach einem der Ansprüche 1 bis 9, **gekennzeichnet dadurch, dass** die hintere Kante (12) mehrere Streifen des Flächengebildes (10) umfasst.

11. Gezogene Zeckenfangvorrichtung nach einem der Ansprüche 1 bis 10, **gekennzeichnet dadurch, dass** das Flächengebilde (10) Löcher in der über den Boden gezogenen Oberfläche umfasst.

12. Gezogene Zeckenfangvorrichtung nach einem der Ansprüche 1 bis 11, **gekennzeichnet dadurch, dass** die hintere Kante (12) ein längliches Gewicht umfasst.

13. Gezogene Zeckenfangvorrichtung nach einem der Ansprüche 1 bis 10, **gekennzeichnet dadurch, dass** das Flächengebilde (10) Kunstpelz ist.

14. Gezogene Zeckenfangvorrichtung nach einem der Ansprüche 1 bis 10, **gekennzeichnet dadurch, dass** das Lockmittel Pheromone umfasst.

15. Gezogene Zeckenfangvorrichtung nach einem der Ansprüche 1 bis 10, **gekennzeichnet dadurch, dass** das Lockmittel eine klangerzeugende Vorrichtung umfasst.

## Revendications

1. Dispositif de collecte de tiques par traînage, comprenant :
un tissu (10) comportant un bord avant (11) et un bord arrière (12), étant configuré pour être traîné par le bord avant (11) le long du terrain en incitant ainsi une tique à s'accrocher au tissu (10);
**caractérisé en ce que** le tissu (10) comprend au moins une poche (13, 14, 22) configurée pour recevoir et stocker un leurre, ladite poche (13, 14, 22) étant configurée pour répandre l'effet du leurre vers la tique.

2. Dispositif de collecte de tiques par traînage selon la revendication 1, **caractérisé en ce que** le leurre est un dispositif exothermique.

3. Dispositif de collecte de tiques par traînage selon la revendication 2, **caractérisé en ce que** le dispositif exothermique est un sachet chauffant.

4. Dispositif de collecte de tiques par traînage selon la revendication 2, **caractérisé en ce que** le dispositif exothermique est un dispositif alimenté par pile.

5. Dispositif de collecte de tiques par traînage selon l'une des revendications 1 à 4, **caractérisé en ce que** le leurre est un émetteur de dioxyde de carbone.

6. Dispositif de collecte de tiques par traînage selon la revendication 5, **caractérisé en ce que** l'émetteur de dioxyde de carbone est un cylindre à dioxyde de carbone configuré pour distribuer du dioxyde de carbone.

7. Dispositif de collecte de tiques par traînage selon la revendication 5, **caractérisé en ce que** l'émetteur de dioxyde de carbone est on bloc de glace sèche.

8. Dispositif de collecte de tiques par traînage selon l'une des revendications 1 à 7, **caractérisé en ce qu'**un tube est disposé le long du bord avant (11), ledit dispositif de collecte de tiques pouvant être traîné avec une corde (16) attachée au tube.

9. Dispositif de collecte de tiques par traînage selon la revendication 8, **caractérisé en ce que** le tube comprend plusieurs trous d'émission, ledit émetteur de dioxyde de carbone étant à l'intérieur du tube et le dioxyde de carbone étant aménagé pour passer par les trous d'émission.

10. Dispositif de collecte de tiques par traînage selon l'une des revendications 1 à 9, **caractérisé en ce que** le bord arrière (12) comprend plusieurs rubans de tissu (10).

11. Dispositif de collecte de tiques par traînage selon l'une des revendications 1 à 10, **caractérisé en ce que** le tissu (10) comprend des trous dans la surface traînée le long du terrain.

12. Dispositif de collecte de tiques par traînage selon l'une des revendications 1 à 11, **caractérisé en ce que** le bord arrière (12) comprend un poids allongé.

13. Dispositif de collecte de tiques par traînage selon l'une des revendications 1 à 10, **caractérisé en ce que** le tissu (10) est de la fausse fourrure.

14. Dispositif de collecte de tiques par traînage selon l'une des revendications 1 à 10, **caractérisé en ce que** le leurre comprend des phéromones.

15. Dispositif de collecte de tiques par traînage selon l'une des revendications 1 à 10, **caractérisé en ce que** le leurre comprend un dispositif de génération sonore.
